# EUROPÄISCHE PATENTANMELDUNG

(11) **EP 2 383 590 A1**
(43) Veröffentlichungstag der Anmeldung: **02.11.2011**
(21) Anmeldenummer: 10005854.4
(22) Anmeldetag: 07.06.2010
(51) Int. Cl.: G02B 6/00, D03D 15/00

(54) **Flächenhaftes Beleuchtungselement**

(30) Priorität: 30.04.2010 EP 10004565
(71) Anmelder: SCHOTT AG, 55122 Mainz (DE)
(72) Erfinder: Toms, Christopher, David, 55262 Heidesheim (DE); Wartmann, Claudia, 55116 Mainz (DE); Bauer, Jana, 55276 Oppenheim (DE); Klinker, Kathrin, 55131 Mainz (DE); Alter, Patricia, 55288 Partenheim (DE)

(57) **Zusammenfassung**

Die Erfindung betrifft ein flächenhaftes Leuchtelement umfassend eine Mehrzahl von lichtleitenden Fasern und ein flächenhaftes Trägerelement welches aus Papier besteht, in welches die lichtleitenden Fasern und gegebenenfalls funktionale Partikel eingebettet oder eingelegt sind oder auf dessen Oberfläche die lichtleitenden Fasern und gegebenenfalls funktionale Partikel aufgeklebt sind.

## Beschreibung

### Gebiet der Erfindung

Die vorliegende Erfindung betrifft ein flächenhaftes Leuchtelement mit einem Trägerelement und Lichtleitern sowie ein Verfahren zur Herstellung eines flächenhaften Leuchtelements.

### Hintergrund der Erfindung

Flächige Leuchtelemente werden insbesondere im Architekturbereich immer mehr eingesetzt, wobei die Gestaltungsmöglichkeiten durch verschiedene Ausgestaltungen der Leuchtelemente vergrößert werden.

So wird in der US 4,234,907 bereits eine Wandverkleidung beschrieben, welche aus einem Gewebe aus lichtleitenden Fasern beziehungsweise aus einem textilen Gewebe mit lichtleitenden Fasern besteht über die Licht in das Gewebe eingekoppelt werden kann, welches dann über die Fläche verteilt an verschiedenen Stellen austritt, so dass ein Beleuchtungseffekt entsteht. Die lichtleitenden Fasern können aus Kunststoff oder Glas bestehen und werden zur Herbeiführung einer seitlichen Emission von Licht mit Kerben oder Anritzungen in der Oberfläche versehen. Nachteilig bei dieser Lösung ist die extreme Bruchempfindlichkeit insbesondere der Glasfasern bei der Herstellung und Verarbeitung der Gewebe und die damit verbundene Fehlerhäufigkeit durch Strukturbrüche.

Die WO 00/61991 beschreibt ein Gewebe für eine Wandverkleidung, welches ummantelte Stränge aus optischen Fasern in Kettrichtung umfasst, welche mit Standardfasern in Schussrichtung zu einem Heimdekortextil verarbeitet werden. Die Fasern in jedem Strang sind in unregelmäßigen Abständen gebrochen, so dass an diesen Stellen Licht aus den Fasern heraustritt und über die Fläche verteilt ein Beleuchtungseffekt entsteht.

Nachteilig an diesem Flächengewebe ist neben den Problemen bei der Herstellung des Gewebes insbesondere die aufwändige notwendige Ummantelung der einzelnen Faserbündel. Weiterhin wird die gesamte Zugbelastung in Kettrichtung von den empfindlichen lichtleitenden Fasern getragen.

Die WO 2009/100834 beschreibt ein Flächengebilde, in welchem seitenemittierenden Stufenindexfasern alleine oder zusammen mit anderen Lichtleitern und/oder Textilfasern mit einem Trägerelement zu einem Verbundelement verbunden sind. Die lichtleitenden Fasern können hierbei in das Trägerelement eingebettet, in einer Kunststoffeinkapselung mit diesem verbunden, mit diesem oder auch untereinander vernäht oder verwoben oder auch mit dem Trägerelement verklebt oder laminiert sein. Es wird jedoch keine genauere Ausführung angegeben.

Die DE 102007018227 beschreibt ebenfalls ein textiles Flächengebilde mit einem Beleuchtungseffekt, welches als Decken- oder Wandverkleidung verwendbar ist. Hier wird eine Mehrzahl von Bündeln aus lichtleitenden Fasern mittels eines Fadens durch ein Wirkverfahren mit einem Trägerelement verbunden. Der Faden hat zudem die Aufgabe, die einzelnen Faserbündel zusammenzuhalten. Das Trägerelement ist ein Gewebe, Gewirk, Gestrick oder ein Vlies, bevorzugt ein Glasfaserflies bei welchem, aufgrund der weichen, dicken Ausbildung, die lichtleitenden Fasern durch das Wirkverfahren in das Vlies hineingedrückt werden. Die Herstellung einer solchen Wand- oder Deckenverkleidung ist teuer und aufwändig und aufgrund seiner Materialeigenschaften nur schwer montierbar.
In einer anderen Ausgestaltung wird das textile Flächengebilde in einen transluzenten Träger eingegossen oder einlaminiert. Es wird ein transparentes Kunststofflaminat beschrieben, bei welchen auf zumindest einer Seite ein transparenter Kunststoff auf das textile Flächengebilde auflaminiert wird. Dies ist jedoch ebenfalls ein teures und aufwändiges Herstellungsverfahren und als Wand- oder Deckenverkleidung nur mit einer aufwändigen Montage nutzbar.

Insgesamt haben textile Materialien als Träger für lichtleitende Fasern den Nachteil, dass sie auf eine gewisse Fasergewebedicke eingeschränkt sind, mit relativ kostenintensivem Fertigungsaufwand verbunden sind sowie schwer und aufwändig verarbeitbar sind.

### Aufgabe der Erfindung

Der Erfindung liegt demgegenüber die Aufgabe zugrunde, ein flächenhaftes Leuchtelement bereitzustellen, bei welchem die genannten Nachteile des Standes der Technik vermindert werden.

Insbesondere ist es eine Aufgabe der Erfindung, ein flächenhaftes Leuchtelement mit lichtleitenden Fasern bereitzustellen, welches auf kostengünstige Weise herstellbar und unter anderem auch auf einfache Weise als Wand- oder Deckenverkleidung oder als Raumteiler verwendbar ist.

### Beschreibung der Erfindung

Die Aufgabe der Erfindung wird bereits durch ein flächenhaftes Leuchtelement sowie durch ein Verfahren zur Herstellung eines flächenhaftes Leuchtelement nach einem der unabhängigen Ansprüche gelöst.

Bevorzugte Ausführungsformen und Weiterbildungen der Erfindung sind den jeweiligen Unteransprüchen zu entnehmen.

Die Erfindung betrifft ein Leuchtelement mit einem flächenhaften Tägerelement und einer Mehrzahl von lichtleitenden Fasern.

Ein flächenhaftes Leuchtelement ist im Sinne der Erfindung weist im Verhältnis zu seiner Dicke eine große Fläche auf. Auf diese Weise kann auf der Basis der Erfindung ein selbst leuchtendes, flächiges Gebilde erzeugt werden. Das Leuchtelement kann dabei eben oder ein- oder mehrfach beliebig gebogen, gewölbt oder geknickt sein.

Das flächenhafte Leuchtelement umfasst ein flächenhaftes Tägerelement, welches im Wesentlichen aus Papier besteht. Die lichtleitenden Fasern können in einer Papierbahn eingebettet sein, sie können auf einer Papierbahn aufgebracht sein oder sie können zwischen zwei Papierbahnen eingebettet und durch diese gehalten werden.

Die Erfinder haben herausgefunden, dass es möglich ist, lichtleitende Fasern in einer Papierbahn bei einem Papierherstellungsprozess einzubetten oder auch diese mittels einer Klebverbindung auf einer oder zwischen zwei Papierbahnen zu fixieren. So kann auf jegliche Beanspruchung der empfindlichen Fasern durch ein Web- oder Wirkerei-Verfahren verzichtet werden. Auch können hierdurch sehr dünne flächenhafte Leuchtelemente hergestellt werden, welche in ihrer Dicke unterhalb derjenigen nach dem Stand der Technik liegen. Auch können die erfindungsgemäßen Leuchtelemente auf einfache Weise als Leuchttapeten Verwendung finden.

Die lichtleitenden Fasern werden zur Verstärkung des Beleuchtungseffekts bevorzugt als Bündel lichtleitender Fasern in das Papier eingebettet oder auf diese aufgebracht. Hierbei wird entweder auf eine gleichmäßige Lichtverteilung über die Fläche geachtet oder es werden gezielte Muster, Logos oder auch Worte geformt. Je nachdem, welcher Effekt erzielt werden soll, werden endemittierende oder seitenemittierende Fasern oder eine Mischung von beiden verwendet.

Als Fasern werden lichtleitende optische Fasern aus jedem Material verwendet, mit dem eine Herstellung von lichtleitenden Fasern möglich ist, beispielsweise aus Kunststoff, wie Polymethylmethacrylat (PMMA).

Bevorzugt werden jedoch lichtleitende optische Glasfasern verwendet. Dies gewährleistet vor allem gegenüber Kunststofffasern eine Alterungsbeständigkeit und Langzeitstabilität in der Licht- und Materialfarbe.
Die Verwendung von Glasfasern schließt auch die Verwendung von Glasfasern ein, welche im Wesentlichen UV-durchlässig sind, insbesondere von Quarzglasfasern. So kann beispielsweise UV-Licht in das flächenhafte Leuchtelement eingekoppelt werden, was, insbesondere in Verbindung mit einer Titandioxid aufweisenden Beschichtung der Fasern oder des Trägerelements eine keimtötende Wirkung hat.

Bei einer Weiterbildung der Erfindung sind die lichtleitenden Fasern zumindest teilweise als seitlich abstrahlende Lichtleiter ausgebildet.

Eine seitlich abstrahlende Lichtfaser ist beispielsweise in der Patentschrift US 4 466 697 (Erfinder Maurice Daniel) beschrieben. Auf den Offenbarungsgehalt dieses Dokumentes wird vollumfänglich Bezug genommen.

Seitlich abstrahlende Lichtleiter haben den Vorteil, dass keine weiteren Maßnahmen zur Auskopplung des Lichtes auf der Fläche getroffen werden müssen.

Alternativ oder in Kombination kann die Auskopplung durch Brüche, Kerben oder andere Verletzungen wie Einritzungen, Kratzer, Rillen, Dellen und weitere Unregelmäßigkeiten in der Oberfläche der Einzelfasern sowie durch endemittierende Einzelfasern in unterschiedlichen Längen erzeugt werden.

So ist es auf besonders einfache Weise möglich, das Licht bezogen auf die Fläche definiert auszukoppeln. Insbesondere lassen sich Muster erzeugen, oder es können mit zunehmendem Abstand zur Lichtquelle größer werdende Verluste durch eine höhere Zahl an Auskopplungsstellen kompensiert werden.

In einer bevorzugten Weiterbildung der Erfindung sind die lichtleitenden Fasern zumindest teilweise als seitenemittierende punktleuchtende Fasern ausgebildet, wie sie von der Firma Schott AG unter der Bezeichnung "SCHOTT SpectraTM Sparkling Glasfaserbauteil" angeboten werden.

In einer weiteren bevorzugten Weiterbildung der Erfindung sind die lichtleitenden Fasern zumindest teilweise als seitenemittierende gleichmäßig seitlich leuchtende Stufenindexfasern ausgebildet, wie sie in der Patentanmeldung WO 2009/100834 beschrieben sind, auf deren Offenbarungsgehalt vollumfänglich Bezug genommen wird und deren Offenbarung Bestandteil dieser Anmeldung ist.
Als Stufenindexfasern werden lichtleitende Fasern verstanden, wobei die Lichtleitung in dem Faserkern durch Totalreflektion des in dem Kern geleiteten Lichts an dem den Faserkern entlang der Faserachse umschließenden Mantel erfolgt. Die Totalreflektion tritt dann auf, wenn der Mantel einen niedrigeren Brechungsindex aufweist als der des Faserkerns, welcher das Licht leitet. Allerdings ist die Bedingung der Totalreflektion nur bis zu einem Grenzwinkel des auf den Mantel treffenden Lichts möglich, der von den Brechungsindices von Kern und Mantel abhängig ist. Der Grenzwinkel β_{Min}, d.h. der kleinste Winkel, bei dem noch die Totalreflektion auftritt, kann berechnet werden durch sin(β_{Min}) = n₂ / n₁, wobei β_{Min} von einer Ebene senkrecht zur Faserachse gemessen wird, n₁ den Brechungsindex des Faserkerns und n₂ den Brechungsindex des Mantels repräsentiert.
Im Allgemeinen wird eine möglichst gute Führung des Lichts in der Faser angestrebt, d.h. es soll möglichst wenig Licht bei der Einkopplung in die Faser und bei dem Transport in der Faser verloren gehen. Eine seitenemittierende Stufenindexfaser ist eine Stufenindexfaser, bei der absichtlich Licht aus dem Faserkern und aus der Faser ausgekoppelt wird. Im Allgemeinen ist eine gleichmäßige Auskopplung erwünscht, welche eine seitenemittierende Stufenindexfaser im Idealfall als ein gleichmäßig leuchtendes Band oder Linie erscheinen lassen.

Eine seitenemittierende Stufenindexfaser beinhaltet einen lichtleitenden Kern aus einem Glas mit dem Brechungsindex n₁ und einen den Kern entlang der Faserachse umschließenden transparenten und/oder transluzenten Mantel aus einem Glas mit dem Brechungsindex n₂, wobei sich zwischen Kern und Mantel zumindest ein Streubereich befindet, der aus einem Glas gebildet wird, welches im wesentlichen den gleichen Brechungsindex n₃ aufweist und in welches Streuzentren eingelagert sind und wobei sich der Brechungsindex n₃ dieses Glases im wesentlichen von dem Brechungsindex n₂ des Mantelglases unterscheidet.
Der Mantel umschließt wie bei Fasern üblich sowohl den Kern aber auch den oder die Streubereiche entlang der Faserachse vollständig. Der oder die Streubereiche liegen demnach auf der Oberfläche des Faserkerns, geschützt von dem Mantel. Der Effekt der Seitenemission wird bei der seitenemittierende Stufenindexfaser durch Streuung des in dem Kern geleiteten Lichts in einem im Verhältnis zum Kerndurchmesser dünnen Bereich zwischen Kern und Mantel erzeugt. Dazu befindet sich zwischen Kern und Mantel in unmittelbarem Kontakt zwischen beiden ein Streubereich, in welchem die Streuung stattfindet. Verantwortlich für die Streuung sind Streuzentren, welche in den Streubereich eingelagert sind. Streuzentren bei der seitenemittierenden Stufenindexfaser sind alle Partikel und/oder Materialagglomerationen und/oder inhomogene Bereiche, gleich welcher Form, welchen Materials und/oder welcher Größe, die das geleitete Licht streuen können. Die Streuzentren können durch klassische Streuung, insbes. Rayleigh- und/oder Mie-Streuung, ebenso wie durch Beugung und/oder Reflektion sowie Mehrfachprozessen dieser Mechanismen untereinander ihre streuende Wirkung entfalten. Ihre Funktion ist lediglich, individuell oder in ihrer Summe auftreffendes Licht abzulenken.
Durch die geeignete Wahl der Werte der Brechungsindices n₁, n₂ und n₃ kann das Auskoppelverhalten der seitenemittierenden Stufenindexfaser den jeweiligen Erfordernissen angepasst werden. Die Einlagerung der Streuzentren in einer Matrix aus Glas ist für eine seitenemittierende Stufenindexfaser auch deshalb notwendig, um sie überhaupt erst auf wirtschaftliche Weise auf dem Kern aufbringen zu können. Das Mantelglas mit dem Brechungsindex n₂ unterscheidet sich bevorzugt von dem Glas, in das die Streuzentren eingelagert sind. Daher unterscheidet sich der Brechungsindex n₃ im wesentlichen von n₂.

Die Verwendung einer solchen lichtemittierenden Faser führt bei einer gleichmäßigen Flächenverteilung der lichtemittierenden Fasern zu einer besonders vorteilhaften Ausführung der Erfindung in Gestalt eines flächenhaften Leuchtelements mit einer nahezu gleichmäßigen Lichtstärkeverteilung über der Fläche, welches somit Licht homogen über die Fläche oder in gleichmäßigen Mustern entsprechend der Flächenverteilung der Fasern emittieren kann. Ein solches flächiges Leuchtelement ist bevorzugt so ausgestaltet, dass ein Betrachter es als homogen leuchtende Fläche wahrnimmt, wenn das Flächengebilde in Betrieb ist, d.h. wenn Licht in die seitenemittierenden Stufenindexfasern des Flächengebildes eingekoppelt wird.

Seitenemittierend im Sinne der Erfindung heißt, dass die Faser in der Lage ist, Licht seitlich zu emittieren, unabhängig davon, ob sie im Betrieb ist, d.h. ob tatsächlich eine Lichtquelle angeschlossen und das Licht eingeschaltet ist.

Bei einer bevorzugten Ausführungsform der Erfindung umfasst ein Bündel lichtleitender Fasern zwischen 20 bis 2000 Einzelfasern. Die Faserbündel haben vorzugsweise einen Durchmesser zwischen 0,4 und 3 mm, bevorzugt zwischen 1 und 3 mm. Ein 1 mm dickes Faserbündel hat bevorzugt eine Anzahl von 100 bis 500 besonders bevorzugt zwischen 200 und 350 Einzelfasern. Ein 3 mm dickes Faserbündel hat bevorzugt eine Anzahl zwischen 1000 bis 2000, besonders bevorzugt zwischen 1500 und 1600 Einzelfasern.

Bei einer weiteren bevorzugten Ausführungsform der Erfindung werden die Faserbündel beim Aufbringen derart breitgedrückt und flächig aufgefasert, dass in dem derart aufgefächerten Bündel zumindest abschnittsweise weniger als 10, vorzugsweise weniger als 5 Fasern übereinander angeordnet sind. Dadurch, dass nur wenige Fasern übereinander liegen, wird eine bessere Fixierung der Fasern erreicht. Gleichzeitig wird von dem jeweiligen Bündel eine größere Fläche eingenommen.

Die Bündel lichtleitender Fasern, welche vorzugsweise im Wesentlichen parallel zueinander liegen, sind bei einer bevorzugten Ausführungsform der Erfindung mindestens 30 %, vorzugsweise mindestens 60 % und besonders bevorzugt mindestens 100 % von ihrer jeweiligen Breite voneinander beabstandet.

Bei einer besonders bevorzugten Ausführungsform der Erfindung sind die breitgedrückten Bündel derart voneinander beabstandet, dass sie etwa die Hälfte der Fläche des Flächengebildes einnehmen.

Vorzugsweise werden Fasern mit einem Durchmesser zwischen 15 und 150 µm, bevorzugt zwischen 30 und 100 µm und besonders bevorzugt zwischen 40 und 80 µm verwendet. Je nach Anwendungszweck können verschiedene Faserdurchmesser verwendet werden. Die Erfinder haben herausgefunden, dass die Verwendung eines Faserdurchmessers bis etwa 70 µm noch die Verwendung des flächenhaften Leuchtelements als Leuchttapete oder als dauerhaft bewegliches Element, etwa eines Vorhangs, Raumteilers oder Rollos ermöglicht, ohne dass die Fasern übermäßig zu Brüchen neigen.

Bei einer Weiterbildung der Erfindung sind die lichtleitenden Fasern zumindest teilweise beschichtet.

Die Beschichtung kann zum einen eine optische Funktion haben. Insbesondere sind Interferenzbeschichtungen vorgesehen oder Beschichtungen, welche einen Stoff enthalten, der durch das Licht der Faser angeregt wird und so zu weiteren Beleuchtungseffekten führt.

Des Weiteren sind Beschichtungen mit fungizider und/oder bakterizider Wirkung vorgesehen.

Die Verwendung von Glasfasern ermöglicht dabei auch den Einsatz von PVD-(Physical Vapor Deposition) oder CVD- (Chemical Vapor Deposition) Verfahren, da derartige Glasfasern sowohl chemisch sehr beständig sind, als auch hohen Temperaturen ausgesetzt werden können, ohne sich zu verformen.

Weiter betrifft die Erfindung ein flächenhaftes Leuchtelement mit einem doppelten optischen Effekt, derart, dass optische Fasern sowohl als gleichmäßig seitlich abstrahlende Fasern ausgebildet sind, als auch, dass in einem Faserbündel einzelne Fasern in regelmäßigen oder unregelmäßigen Abständen gebrochen sind.

Über ein Material, das derartige verschiedene Austrittsmöglichkeiten für ein gekoppeltes Licht hat, lassen sich besondere optische Effekte erzielen. So können die Brüche der Auskopplung von größeren Mengen Licht dienen, um einen Beleuchtungseffekt zu erzielen. Über eine seitlich abstrahlende Faser, insbesondere durch Einbettung von lichtstreuenden oder lichtreflektierenden Partikeln in der Faser, und/oder in dem umgebenden Trägermaterial kann beispielsweise ein Glitzereffekt erzielt werden.

Bei einer bevorzugten Ausführungsform der Erfindung haben die Fasern bei einer Wellenlänge λ_{d} von 589,3 nm eine Brechzahl zwischen 1,3 und 1,7, bevorzugt zwischen 1,55 und 1,65. Bei einer Weiterbildung der Erfindung ist zumindest ein Teil der lichtleitenden Fasern beschichtet. Insbesondere ist vorgesehen, eine optisch aktive Beschichtung zu verwenden, welche beispielsweise als Interferenzschichtsystem oder als Fluoreszenzschicht ausgebildet sein kann.

In einer besonders vorteilhaften Ausgestaltung der Erfindung hat ein erfindungsgemäßes flächenhaftes Leuchtelement eine Anzahl von lichtemittierenden Fasern auf zumindest einer Leuchtfläche, die so bemessen ist, dass bei Einkopplung von Licht von einer Lichtquelle der erzeugte Lichtstrom bezogen auf die gesamte Leuchtfläche des flächenhaftes Leuchtelements mindestens 20 lm/m², bevorzugt mindestens 100 lm/m², besonders bevorzugt mindestens 200 lm/m² beträgt. Die Flächenanordnung der lichtleitenden Fasern kann dabei homogen sein oder ein beliebiges Muster bilden.

Bei einer Weiterbildung der Erfindung sind in das flächenhafte Trägerelement funktionale Partikel eingebettet. Zur Erzielung eines Glitzer- oder Lichtspiegelungseffekts können dies lichtreflektierende oder lichtstreuende Partikel, insbesondere Metallplättchen oder Metallpigmente, beschichtete insbesondere verspiegelte Kunststoffpartikel oder Glaspartikel sein. Durch eine geeignete Auswahl der Partikel hinsichtlich ihrer farblichen oder geometrischen Gestaltung und ihrer optischen Eigenschaften kann eine Vielfalt von Effekten erzielt werden.
In einer besonderen Ausführungsform bestehen diese Partikel aus einem nachleuchtendem Material, wie photolumineszente Partikel. In einer anderen Ausführungsform sind diese Partikel facettierte bzw. geschliffene Glaspartikel, insbesondere mit einem Durchmesser 1 bis 2 mm, vorzugsweise 1,3 bis 1,5 mm. In einer anderen Ausführungsform sind diese Partikel aus einem Kunststoff, welchem Metallpigmente beigemischt wurden.

Die funktionalen Partikel können im Papierherstellungsprozess dem Papierbrei beigemischt werden oder auch in Verbindung mit dem Einlegen der lichtleitenden Fasern im Herstellungsprozess in gewünschter Flächenverteilung aufgestreut oder zugegeben werden.

Das flächenhafte Trägerelement besteht im Wesentlichen aus Papier, wie es dem Fachmann bekannt ist. Das Papier kann insbesondere hergestellt sein aus Zellulosematerial und/oder Faserstoffen, wie z.B. Zellstoffe, Halbzellstoffe, Holzschliff, Kunstfasern oder pflanzliche Fasern, mit Zusätzen von Stärke, mit Zusätzen von z.B. tierischen Leimen, Harzen, Paraffinen oder Wachsen zur Leimung und Imprägnierung und mit Zusätzen von Füllstoffen wie z.B. Kaolin, Talkum, Gips, Bariumsulfat, Kreide oder Titanweiß. Für die Herstellung eines sehr dünnen flächenhaften Leuchtelements wird ein Rohstoff mit längeren Fasern die gut verfilzen sowie eine Leimung bevorzugt.

Für eine Wandverkleidung, welche wie eine Tapete auf die Wand aufgeklebt wird, entspricht die Papierqualität im Wesentlichen einer Tapete aus überwiegend Zellulosebestandteilen. Je nach gewünschter Ausgestaltung des Trägermaterials können aber andere Arten von Fasern oder Zusätzen verwendet werden. Die lichtleitenden Fasern sind in jedem Fall mit dem Trägerelement verbunden. In einer Ausführungsform werden die lichtleitenden Fasern im Herstellungsprozess der Papierbahn in diese eingebettet. Sie können dabei direkt an der Oberfläche der Papierbahn liegen, indem sie nur in die Oberfläche des nassen Papierbreis eingedrückt werden oder aber auch ganz oder teilweise im Inneren der Papierbahn positioniert werden, indem sie in die Mitte des Papierbreis eingebettet werden. Hierdurch können besonders dünne flächenhafte Leuchtelemente mit Dicken von 0,1 bis 1,5 mm, vorzugsweise 0,1 bis 1 mm, besonders bevorzugt 0,1 bis 0,5 mm hergestellt werden. Um flächenhafte Leuchtelemente mit Dicken im Bereich 0,2 bis 3 mm, vorzugsweise 0,2 bis 1,5 mm, besonders bevorzugt 0,2 bis 1 mm herzustellen, kann im Herstellungsprozess der Papierbahn auf die erste Lage Papierbrei, nach dem Einbetten bzw. Einlegen der lichtleitenden Fasern, diese noch mit weiterem Papierbrei überdeckt werden.

Das Herstellungsverfahren umfasst folgende Schritte: Zunächst wird nach herkömmlichen Stand der Technik ein zur Papierherstellung aufbereiteter Papierbrei, gegebenenfalls unter Zugabe funktionaler Partikel, bereitgestellt. Dieser wird auf ein Sieb aufgegeben. Sodann werden die lichtleitenden Fasern entsprechend der gewünschten Flächenverteilung aufgelegt und gegebenenfalls, je nach gewünschtem Effekt mehr oder weniger eingedrückt, wobei sie im Wesentlichen an der Oberfläche oder im Inneren des Trägerelements positioniert werden. Je nach gewünschtem Effekt werden die lichtleitenden Fasern noch mit weiterem Papierbrei überdeckt. In einer anderen Variante werden die lichtleitenden Fasern in gewünschter Flächenverteilung auf das Sieb aufgelegt und mit Papierbrei überdeckt. Hierbei verbleiben die lichtleitenden Fasern an der Oberfläche des Trägerelements. Währenddessen oder anschließend wird die so erhaltene Papierbahn entwässert und dann gepresst, wobei der Pressdruck so gewählt wird, dass die lichtleitenden Fasern keinen Schaden erleiden. Anschließend wird die Papierbahn mit den lichtleitenden Fasern getrocknet.

Nach der Fertigstellung des flächenhaften Leuchtelements kann dieses direkt auf einer Wand mit geeignetem Kleber, insbesondere mit Tapetenkleister aufgeklebt werden. Je nach Effekt, den man erzielen möchte, kann dieses flächenhafte Trägerelement auch mit einem dekorativen Überzug wie z.B. einer Farbe oder einem transparenten Kunststoff überstrichen werden.

In einer anderen erfindungsgemäßen Ausführungsform ist ein flächenhaftes Trägerelement eine Tapete, auf der die lichtleitenden Fasern gegebenenfalls zusammen mit funktionalen Partikeln an der Oberfläche positioniert sind. Eine solches flächenhaftes Leuchtelement eignet sich insbesondere nach seinem Aufkleben auf eine Wand zum Überstreichen mit einem dekorativen Überzug. Dieser kann eine Farbe sein oder aber auch ein transparenter Kunststoff.

Das Herstellungsverfahren umfasst folgende Schritte: Es wird eine geeignete Papierbahn bereitgestellt, die als Trägerelement dient. Diese Papierbahn kann eine beliebige geeignete Bahn sein, sie kann aber auch schon entsprechend der vorigen Ausführungsform lichtleitende Fasern und/oder gegebenenfalls funktionale Partikel eingebettet oder an der Oberfläche liegend enthalten. Auf der Papierbahn werden die lichtleitenden Fasern entsprechend der gewünschten Flächenverteilung, gegebenenfalls zusammen mit funktionalen Partikeln, aufgebracht und mit einem geeigneten Kleber mit dieser verklebt. Vorzugsweise werden die lichtleitenden Fasern, gegebenenfalls zusammen mit funktionalen Partikeln, in dem nassen Kleber auf der Papierbahn positioniert. Als Kleber eignet sich vor allem ein Kleister wie Tapetenkleister oder ein Leim. Hierdurch können ebenfalls besonders dünne flächenhafte Leuchtelemente mit Dicken von 0,1 bis 1,5 mm, vorzugsweise 0,1 bis 1 mm, besonders bevorzugt 0,1 bis 0,5 mm hergestellt werden.

In einer anderen erfindungsgemäßen Ausführungsform besteht ein flächenhaftes Trägerelement aus einer Trägerbahn und einer Deckbahn insbesondere, wenn die lichtleitenden Fasern in dem flächenhaften Trägerelement positioniert sind. Die Trägerbahn kann entsprechend einer der vorgenannten Ausführungsformen hergestellt und gestaltet sein und kann dann mit einer Deckbahn überklebt werden. Die Deckbahn kann ebenfalls eine Papierbahn oder auch eine textile Bahn, beispielsweise aus Seide sein. Die Deckbahnen, welche auf die Trägerbahn geklebt werden, können beliebig bedruckt, strukturiert oder gestaltet sein. Als Kleber eignet sich vor allem ein Kleister wie Tapetenkleister oder ein Leim. Hierdurch können ebenfalls dünne flächenhafte Leuchtelemente mit Dicken von 0,2 bis 3 mm, vorzugsweise 0,3 bis 1 mm, besonders bevorzugt 0,3 bis 0,6 mm hergestellt werden.

Das Herstellungsverfahren umfasst folgende Schritte: Es wird eine geeignete Trägerbahn wie z.B. eine Papierbahn bereitgestellt. Diese Papierbahn kann eine beliebige geeignete Bahn sein, sie kann aber auch schon entsprechend einer der vorigen Ausführungsformen lichtleitende Fasern und/oder gegebenenfalls funktionale Partikel eingebettet, an der Oberfläche liegend oder aufgeklebt enthalten. Auf dieser werden die lichtleitenden Fasern entsprechend der gewünschten Flächenverteilung und gegebenenfalls funktionale Partikel aufgebracht, wobei sie in einer speziellen Ausführungsform mit einem geeigneten Kleber wie beispielsweise Tapetenkleister fixiert werden können. Anschließend wird eine zweite Papierbahn als Deckbahn über den lichtleitenden Fasern und gegebenenfalls funktionalen Partikeln angebracht, wobei die zweite Papierbahn mit der ersten Papierbahn verbunden, vorzugsweise verklebt wird. Als Kleber dient ein geeigneter Kleister wie Tapetenkleister oder ein Leim. Anstelle der zweiten Papierbahn kann auch eine textile Bahn, beispielsweise aus Seide oder auch eine Folie Verwendung finden. In jedem Fall ist das Material der Deckbahn und/oder der Trägerbahn je nachdem, welche Seite/ oder beide Seiten dem zu beleuchtenden Raum zugewandt ist und je nach gewünschtem Effekt mehr oder weniger lichtdurchlässig.

Als Trägerbahn oder als Deckbahn ist auch eine Schallisolierung vorgesehen, die eine der erforderlichen Schallisolierungswirkung entsprechende Dicke hat. In diesem Fall wird bei der Montage an die Wand die Schallisolierung wandseitig montiert. In einer Ausführungsform werden die lichtleitenden Fasern zunächst auf der Schallisolierung fixiert, vorzugsweise verklebt, z.B. mit einem Tapetenkleister. Anschließend kann eine Deckbahn übergeklebt werden oder ein Überzug in Form eines Anstrichs aufgetragen werden. Vorzugsweise wird aber eine Trägerbahn mit eingebetteten oder an der Oberfläche liegenden lichtleitenden Fasern auf die Schallisolierung flächig aufgeklebt, z.B. mit einem Tapetenkleister.

Für einen frei hängenden Raumteiler, Vorhang oder Rollo wird ein reißfesteres Papier, gegebenenfalls mit höherem Binderanteil, längeren sich verfilzenden Fasern oder einem höheren bzw. ausschließlichen Kunstfaseranteil gewählt. Auch kann hierfür ein oben beschriebenes Trägerelement mit ein- oder aufgelegten lichtleitenden Fasern verwendet werden, welche mit einer reißfesteren Deckbahn je nach gewünschtem Dekorationseffekt flächig verklebt wird.

Auf diese Weise lässt sich ein flächenhaftes Leuchtelement mit Beleuchtungseffekt, aber nahezu beliebigem Aussehen bereitstellen.
Neben der Verwendung als Tapete oder als Raumteiler, Vorhang oder Rollo ist die Verwendung als dekoratives Element in jeder Art denkbar. So kann ein solches flächenhaftes Leuchtelement auch zwischen zwei Glasscheiben angeordnet werden, wodurch eine Festigkeit für die Verwendung als Konstruktionsbauteil bereitgestellt wird und auch eine leichtere Reinigbarkeit gegeben wird. Hierbei kann es lose zwischen den zwei Glasscheiben aufgehängt oder fest zwischen diesen gehalten werden. Solche Konstruktionsbauteile werden beispielsweise für Fahrstuhlkabinenwände, Zwischenwände, Brüstungen oder Deckenelemente verwendet. Besonders vorteilhaft ist hier die Verwendung einer faseroptischen Lichtquelle in HID, Halogen oder LED Technologie in gewünschter Farbtemperatur, z.B. "SCHOTT Spectra^{™} MH Light Source 150W" mit 4200K Farbtemperatur, wie sie von der Schott AG angeboten wird. In weiteren Ausführungen können auch Lichtquellen mit farbigem Licht genutzt werden, wobei die Farben durch Filter, Farbräder, oder LED RGB Technologie generiert werden können.

Zur Einkopplung des Lichts können die Faserbündel segmentiert oder komplett zusammengeführt werden.

In einer erfindungsgemäßen Ausgestaltung umfaßt das flächenhafte Leuchtelement eine Vorrichtung zur Einkopplung von Licht.

In einer Ausführungsform umfasst die Vorrichtung eine Halteleiste, welche eine Klemmleiste und eine linienförmige Lichtquelle beinhaltet. Bei einer Einkopplung des Lichts von unten kann eine solche Vorrichtung als untere Beschwerung z.B. bei der Verwendung als Raumteiler, Rollo oder Vorhang dienen. Auch kann eine solche Vorrichtung in einer Fußleiste oder Deckenleiste untergebracht werden, wenn das flächenhafte Leuchtelement z.B. als Leuchttapete zum Einsatz kommt. Zur Steigerung der Leuchtdichte der Abstrahlfläche ist eine Einkopplung von Licht in beide Enden der lichtleitenden Fasern an einer oder an beiden Querschnittsflächen des flächenhaften Trägerelements vorgesehen.
Die Klemmleiste fixiert ein Ende des flächenhaften Trägerelements und die damit verbundenen Enden der lichtleitenden Fasern bzw. Faserbündel in einer linienförmigen Ausrichtung. Die Faser- bzw. Faserbündelenden können hierbei mit dem Ende des flächenförmigen Trägerelements abschließen oder als Verlängerung über dieses hinausgehen. In jedem Fall werden die Faserenden derart ausgerichtet, dass das Licht, welches von der in der Halteleiste angeordneten Lichtquelle emittiert wird, in die Faserenden einkoppelt. Die Lichtquelle erstreckt sich dazu in Form einer Lichtleiste ebenfalls entlang der Halteleiste und wird von dieser den Faserenden gegenüberliegend gehalten. Die Lichtquelle kann eine linienförmige Anordnung von Leuchtdioden (LEDs), bevorzugt Hochleistungsleuchtdioden sein. Vorteilhaft ist hier vor allem auch die geringe Wärmeentwicklung. Aber auch jede andere Art von Leuchtmittel wie Leuchtröhren, bevorzugt Kaltkathoden Lampen (Cold Cathode Fluorescent Lamp, kurz CCFL-Röhren) oder die Verwendung von linienförmigen glasfaseroptischen Lichtleisten, wie sie z.B. von der Schott AG angeboten werden, wie z.B. "SCHOTT Spectra^{™} Lightbar 35mm" oder "SCHOTT Spectra^{™} Lightbar 20mm" mit einer faseroptischen Lichtquelle in HID, Halogen oder LED Technologie in gewünschter Farbtemperatur und Lichtfarbe sind möglich. Zur Fokussierung und Lenkung des Lichts bei der Einkopplung kann je nach Gestaltung der Vorrichtung auch eine spezielle Vorsatzoptik verwendet werden, damit das Licht innerhalb des für die Lichtleitfasern spezifischen Akzeptanzwinkels eingestrahlt werden kann. Als Vorsatzoptik kommen Kunststoff- oder Glaslinsen zu Anwendung, die vor die LEDs in den Lichtleisten als Einzellinsen oder als Gesamtleiste positioniert werden, um die Lichtstreuung einzuengen und die Lichtstrahlung in die Richtung zu fokussieren, wo das Licht in die Fasern eingekoppelt werden soll.

In einer anderen Ausführungsform umfasst die Vorrichtung eine Sammelleiste mit einer Vorrichtung zum Einkoppeln von Licht in die Faserenden mit einer Punktlichtquelle. Die Faser- bzw. Faserbündelenden gehen hier als Verlängerung über das Ende des flächenförmigen Trägerelements hinaus und erstrecken sich bis zum Ort der Lichteinkopplung. Die Sammelleiste kann mit einer Fuß- oder Deckenleiste verbunden sein. Bei der Verwendung des flächenhaften Leuchtelements als Raumteiler oder Vorhang kann eine Aufhängung z.B. in Form von Befestigungselementen für das Leuchtelement mit der Sammelleiste gekoppelt sein. Die Faser- bzw. Faserbündelenden werden in der Sammelleiste zu einem gemeinsamen Faserbündel zusammengeführt und an einem gemeinsamen Ende mittels Endhülsen und/ oder mit Klebebändern zusammengefasst, in der Regel verklebt oder fusioniert. Die Endflächen werden geschliffen und poliert, so dass eine optimale Lichteinkopplung erfolgen kann. Zur Steigerung der Leuchtdichte der Abstrahlfläche können die Lichtleitfasern auch beidseitig zusammengefasst sein, so dass eine beidseitige Lichteinkopplung realisiert werden kann. Hierbei werden die lichtleitenden Fasern in einer Schlaufe in oder auf dem flächenhaften Trägerelement geführt und beide Enden gemeinsam zur Lichteinkopplung zusammengefasst oder beide Enden werden jeweils getrennt voneinander zu einer Lichteinkopplung zusammengefasst.
Die Lichtquelle kann eine Lampe jedweder Art sein. Bevorzugt sind LED-Lampen, Entladungslampen oder Halogenlampen vorgesehen. Als Lichtquelle ist aber auch das Sonnenlicht bzw. das Tageslicht vorgesehen, wenn insbesondere mit dem erfindungsgemäßen Leuchtelement Bereiche in einem Raum erhellt werden sollen, die einem geringeren oder keinem Lichteinfall durch ein Fenster im Raum ausgesetzt sind. Zur Fokussierung und Lenkung des Lichts bei der Einkopplung kann je nach Gestaltung der Vorrichtung auch eine spezielle Vorsatzoptik verwendet werden, damit das Licht innerhalb des für die Lichtleitfasern spezifischen Akzeptanzwinkels eingestrahlt werden kann.

Unabhängig von der Ausführung der Vorrichtung zum Einkoppeln von Licht kann erfindungsgemäß als Lichtquelle auch ein farbgebendes Leuchtmittel eingesetzt werden. Beispielsweise werden RGB-Leuchtdioden verwendet, welche auch einen frei programmierbaren Lichtwechsel in Form von Darstellungen oder Lichtspielen ermöglichen. Auch ist die Verwendung eines speziellen Farbfilters z.B. auch in Form eines color wheels bei der Einkopplung von Licht vorgesehen.

Zur farbigen Gestaltung des erfindungsgemäßen Leuchtelements können aber auch die lichtleitenden Fasern selber aus einem farbigen Glas bestehen oder mit einer farbgebenden Beschichtung versehen sein. Auch kann das Trägerelement beliebig farbig gestaltet sein, indem es entsprechend bedruckt, bemalt oder auf andere Art beschichtet wird. Auch können in das Trägerelement farbige oder strukturgebende Pigmente, Partikel oder Materialien eingearbeitet werden. Dies kann beispielsweise durch Zugabe in den Papierbrei erfolgen oder durch Einlegen oder Einstreuen gleichzeitig mit dem Einlegen der lichtleitenden Fasern erfolgen. Auch kann eine beliebige Kombination der Gestaltungsmöglichkeiten zusammen mit der Lichteinkopplung bestimmter Wellenlängen im sichtbaren Bereich zu einer großen gestalterischen Vielfalt führen.

Um ein ökologisch angepasstes flächenhaftes Leuchtelement bereitzustellen besteht eine besondere Ausführungsform der Erfindung aus bleifreien lichtleitenden Fasern verbunden mit einem Trägerelement aus natürlichen Basismaterialen wie beispielsweise naturbelassenem ungebleichtem Papier oder Seide. Für die Trägerelementherstellung können beispielsweise neben Holzfasern auch Baumwoll-, Hanf-, Flachs-, Abaka- oder Kozofasern vorgesehen werden. Weiterhin wird als Lichtquelle für ein ökologisch angepasstes flächenhaftes Leuchtelement eine LED-Lichtquelle und/ oder Systeme zur Tageslichtlenkung aufgrund ihres niedrigen Energieverbrauchs vorgesehen.

Um das flächenhafte Leuchtelement funktional mit einer Schallisolierung zu verbinden ist es erfindungsgemäß vorgesehen, das Trägerelement entsprechend dicker auszuführen oder ein erfindungsgemäßes Leuchtelement auf eine flächenhafte Schallisolierung aufzukleben.

### Kurzbeschreibung der Zeichnungen

Die Erfindung soll im Folgenden anhand der Beispiele und Zeichnungen Fig. 1 bis Fig. 6 näher beschrieben werden.
- Fig. 1: zeigt eine erste Ausführungsform der Erfindung, in der ein flächenhaftes Leuchtelement in einer Schnittansicht dargestellt ist, bei der die lichtleitenden Fasern in dem flächenhaften Trägerelement eingebettet sind,
- Fig. 2: zeigt eine zweite Ausführungsform der Erfindung, in der ein flächenhaftes Leuchtelement in einer Schnittansicht dargestellt ist, bei der die lichtleitenden Fasern in die Oberfläche des flächenhaften Trägerelement eingelegt sind,
- Fig. 3: zeigt eine dritte Ausführungsform der Erfindung, in der ein flächenhaftes Leuchtelement in einer Schnittansicht dargestellt ist, bei der die lichtleitenden Fasern auf die Oberfläche des flächenhaften Trägerelements aufgeklebt sind,
- Fig. 4: zeigt eine vierte Ausführungsform der Erfindung, in der ein flächenhaftes Leuchtelement in einer Schnittansicht dargestellt ist, bei der die lichtleitenden Fasern auf die Oberfläche einer Trägerbahn aufgeklebt und diese mit einer Deckbahn überklebt ist,
- Fig. 5: a + 5 b zeigt eine schematische Schnittansicht eines flächenhaftes Leuchtelement mit einer Lichteinkopplung über den Querschnitt des flächenhaften Trägerelements mittels einer Halteleiste,
- Fig. 6: a + 6 b zeigt eine schematische Schnittansicht eines flächenhaften Leuchtelements mit einer punktförmigen Lichteinkopplung wobei die Faserenden in einer Lichtfasersammelleiste geführt und entsprechend gebündelt zu der Lichteinkopplung geführt werden.

### Detaillierte Beschreibung der Zeichnungen

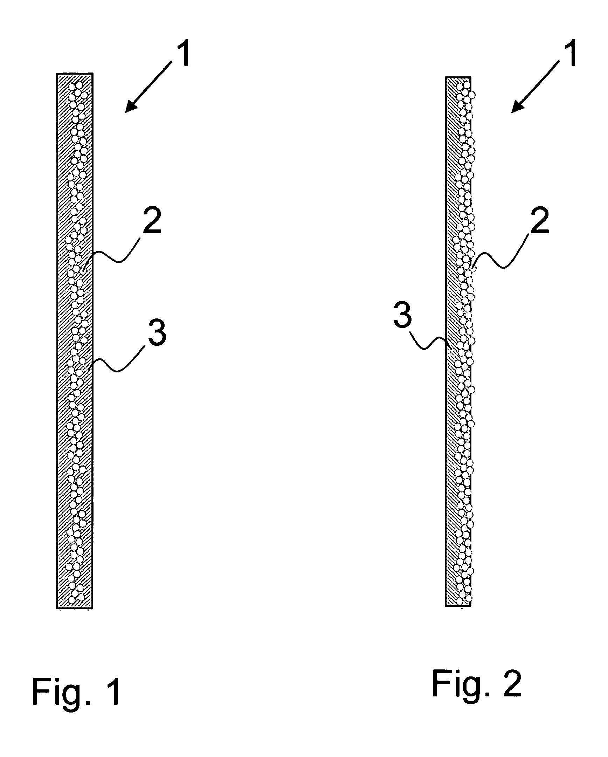

Figuren 1 bis 4 zeigen schematisch Ausführungsbeispiele eines flächenhaften Leuchtelements (1), bei dem die lichtleitenden Einzeifasern bzw. Faserbündel (2) in einem flächenhaften Trägerelement (3) eingebettet, eingelegt bzw. aufgeklebt sind. Für die Herstellung seien folgende Beispiele angeführt.

Zur Herstellung insbesondere eines möglichst dünnen Leuchtelements (1) entsprechend Figur 1, mit in dem Papier eingebetteten lichtleitenden Fasern (2) und einer Dicke von 0,1 bis 0,3 mm, wird zunächst ein nach herkömmlichen Stand der Technik zur Papierherstellung aufbereiteter Papierbrei bereitgestellt. Dieser wird auf ein Sieb aufgegeben. Sodann werden die lichtleitenden Fasern entsprechend der gewünschten Flächenverteilung aufgelegt und mittig in den Papierbrei eingedrückt. Alternativ wird zur Herstellung eines dickeren flächenhaften Leuchtelements (1) mit lichtleitenden Fasern (2) mit einer Dicke von etwa 0,2 bis 0,5 mm der Papierbrei auf ein Sieb aufgegeben, die lichtleitenden Fasern (2) entsprechend der gewünschten Flächenverteilung aufgelegt und mit noch weiterem Papierbrei überdeckt. Währenddessen und anschließend wird die entsprechend erhaltene Papierbahn entwässert und dann gepresst. Anschließend wird die Papierbahn mit den lichtleitenden Fasern (2) getrocknet.

Solch ein flächenhaftes Leuchtelement (1) mit lichtleitenden Fasern (2) kann dieses direkt auf einer Wand mit geeignetem Kleber, insbesondere mit Tapetenkleister aufgeklebt werden. Die Faserenden werden passend abgelängt und mit der Vorrichtung zum Einkoppeln des Lichts verbunden.

Alternativ wird zur Herstellung insbesondere eines möglichst dünnen flächenhaften Leuchtelements entsprechend der Darstellung in Figur 2 mit einer Dicke von 0,1 bis 0,3 mm und in die Oberfläche des flächenhaften Trägerelements (3) eingebetteten lichtleitenden Fasern, zunächst ein nach herkömmlichen Stand der Technik zur Papierherstellung aufbereiteter Papierbrei bereitgestellt. Dieser wird auf ein Sieb aufgegeben. Sodann werden die lichtleitenden Fasern (2) entsprechend der gewünschten Flächenverteilung aufgelegt und nur oberflächlich in den Papierbrei eingedrückt. Alternativ werden zuerst die lichtleitenden Fasern (2) entsprechend der gewünschten Flächenverteilung auf das Sieb aufgelegt und danach der aufbereitete Papierbrei über die Fasern aufgegeben. Anschließend wird die entsprechend erhaltene Papierbahn entwässert, gepresst und anschließend getrocknet.

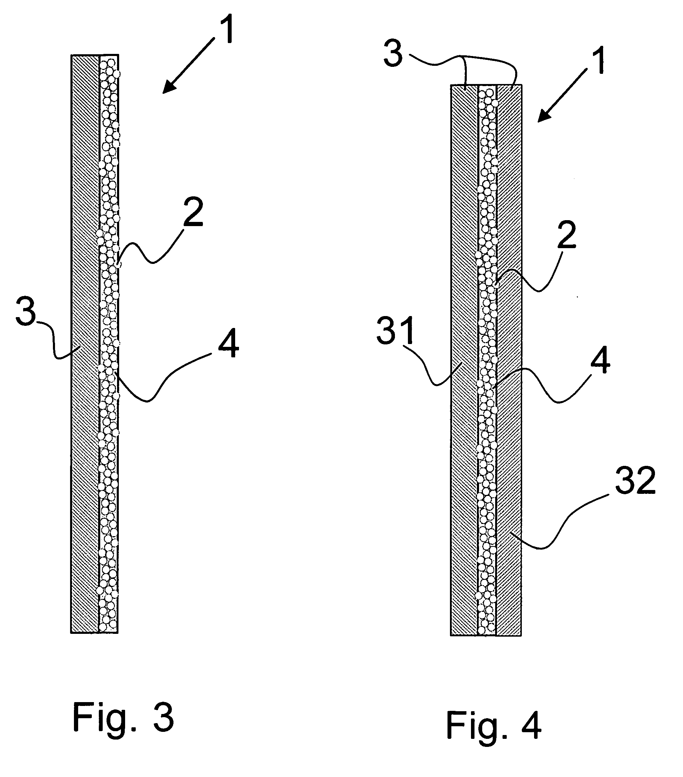

Alternativ wird zur Herstellung insbesondere eines möglichst dünnen flächenhaften Leuchtelements entsprechend der Darstellung in Figur 3 mit einer Dicke von 0,2 bis 0,5 mm und mit der Oberfläche des flächenhaften Trägerelements (3) verbundenen lichtleitenden Fasern eine geeignete Papierbahn bereitgestellt, die als Trägerelement (3) dient. Auf diesem werden die lichtleitenden Fasern (2) entsprechend der gewünschten Flächenverteilung aufgebracht und mit einem geeigneten Kleber, vorzugsweise Tapetenkleister (4) mit dieser verklebt.

Solch ein flächenhaftes Leuchtelement (1) mit lichtleitenden Fasern (2) kann direkt auf einer Wand mit geeignetem Kleber, insbesondere mit Tapetenkleister aufgeklebt werden und eignet sich vor allem als Trägertapete für einen nachfolgenden Anstrich oder Überzug mit einer farbgebenden oder transparenten Beschichtung. Auch kann ein weiteres Material darübertapeziert werden, um einen besonderen dekorativen Effekt zu erzielen. Die Faserenden werden passend abgelängt und mit der Vorrichtung zum Einkoppeln des Lichts verbunden.
Das so erhaltene flächenhafte Leuchtelement (1) mit lichtleitenden Fasern (2) entsprechend Figuren 2 oder 3 kann aber auch als Trägerbahn (31) mit lichtleitenden Fasern (2) für weitere Herstellungsschritte verwendet werden.

Für die Herstellung einer anderen erfindungsgemäßen Ausführungsform entsprechend der Darstellung in Figur 4 mit einer Dicke von 0,4 bis 0,6 mm wird eine Trägerbahn (31) mit an der Papieroberfläche positionieren lichtleitenden Fasern (2) bereitgestellt. Sie kann nach einer der oben beschriebenen Varianten hergestellt sein. Diese Trägerbahn (31) wird auf der Oberfläche, welche die lichtleitenden Fasern (2) trägt, mit einer Deckbahn (32) überklebt. Die Deckbahn (32) kann ebenfalls eine Papierbahn oder auch eine textile Bahn, beispielsweise aus Seide oder auch eine Folie sein. Die Deckbahn (32), welche auf die Trägerbahn (31) geklebt wird, kann beliebig bedruckt, strukturiert oder gestaltet sein. Als Kleber dient ein Kleister, vorzugsweise Tapetenkleister.

Solch ein flächenhaftes Leuchtelement (1) mit lichtleitenden Fasern (2) kann dieses direkt auf einer Wand mit geeignetem Kleber, insbesondere mit Tapetenkleister aufgeklebt werden. Es wird aber auch frei hängend als Raumteiler, Wandelement oder als Vorhang mit integrierter Beleuchtung verwendet. Die Faserenden werden passend abgelängt und mit der Vorrichtung zum Einkoppeln des Lichts verbunden.

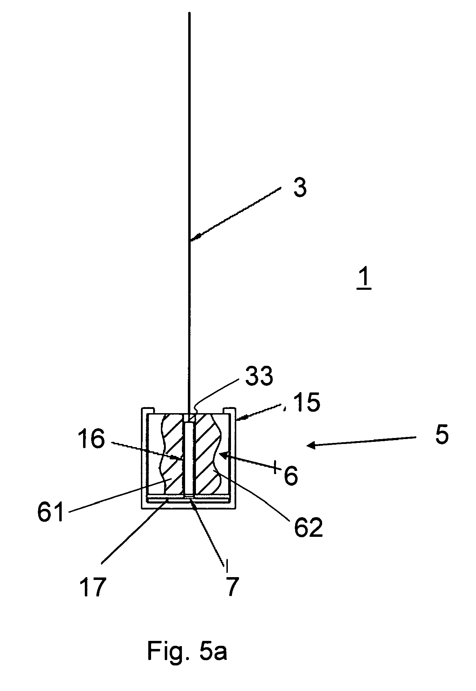

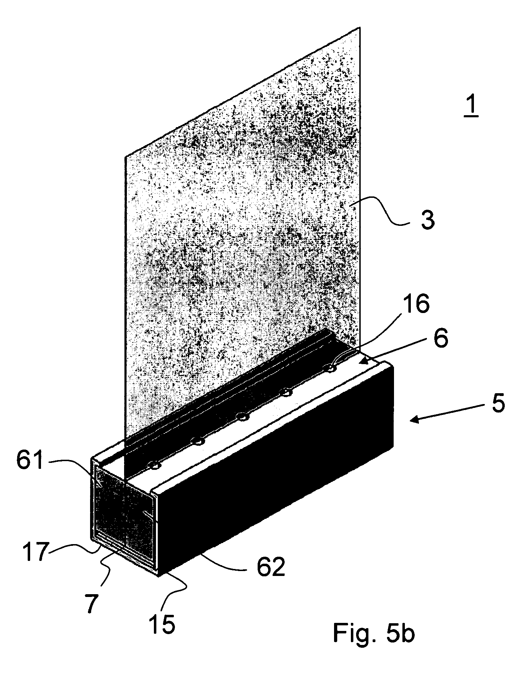

Figur 5a und 5b zeigen beispielhaft ein flächenhaftes Leuchtelement (1) welches eine erfindungsgemäße Vorrichtung zur Einkopplung von Licht in die lichtleitenden Fasern (2) des flächenhaften Leuchtelements (1) in der Ausbildung einer Halteleiste (5) umfasst, wobei die Verlängerung der Fasern (2) über das Ende des flächenhaften Trägerelements (3) nicht länger als die Höhe der Klemmleiste (6) ist. Die Faserenden können aber auch mit der Kante (33) des flächenhaften Trägerelements (3) bündig abschließen.
Die Halteleiste (5) umfasst eine Aufnahmeprofil (15), welches an seiner der Kante (33) des flächenhaften Trägerelements (3) gegenüberliegenden Innenfläche eine Anordnung von Leuchtmitteln (7) auf einer Platine (17) mit Stromversorgung trägt. Die Halteleiste (5) umfasst ferner eine Klemmleiste (6), welche aus zwei leistenförmigen Haltebacken (61, 62) besteht, welche sich über die Länge der Kante (33) des flächenhaften Trägerelements (3) erstrecken. Die Kante (33) des flächenhaften Trägerelements (3) wird von den Haltebacken (61, 62) eingefasst und gehalten, indem die beiden Haltebacken in dem Aufnahmeprofil (15) gegeneinander verspannt werden. Die Kante (33) des flächenhaften Trägerelements (3) wird somit linienförmig zwischen den beiden Haltebacken der Haltleiste (5) fixiert. Die Verspannung der Haltebacken kann durch das Aufnahmeprofil (15) erfolgen, oder auch indem sie beispielsweise miteinander verschraubt werden.
In der Halteleiste (5) sind in einer besonderen Ausführung entlang der mittleren Berührungsflächen der Haltebacken senkrecht durchgehende Ausnehmungen (16), beispielsweise zylindrische Bohrungen mit Hülsen, welche die Verlängerung der jeweiligen lichtleitenden Fasern und/oder Faserbündel bündelweise aufnehmen und linienförmig ausrichten.

In jedem Fall werden die Faserenden durch die in der Halteleiste (5) fixierte Klemmleiste (6) derart einer linienförmigen Anordnung von LEDs, insbesondere von Hochleistungsleuchtdioden gegenüberliegend positioniert, dass das Licht der LEDs (7) in die Faserenden gezielt eingekoppelt werden kann. Zur Fokussierung und Lenkung des Lichts bei der Einkopplung kann vor den LEDs (7) auch eine spezielle Vorsatzoptik verwendet werden, damit das Licht fokussiert und innerhalb des für die Lichtleitfasern spezifischen Akzeptanzwinkels eingestrahlt werden kann. Die LEDs (7) sind in dem Aufnahmeprofil (15) in der Halteleiste fixiert und auf die Enden der lichtleitenden Fasern ausgerichtet.

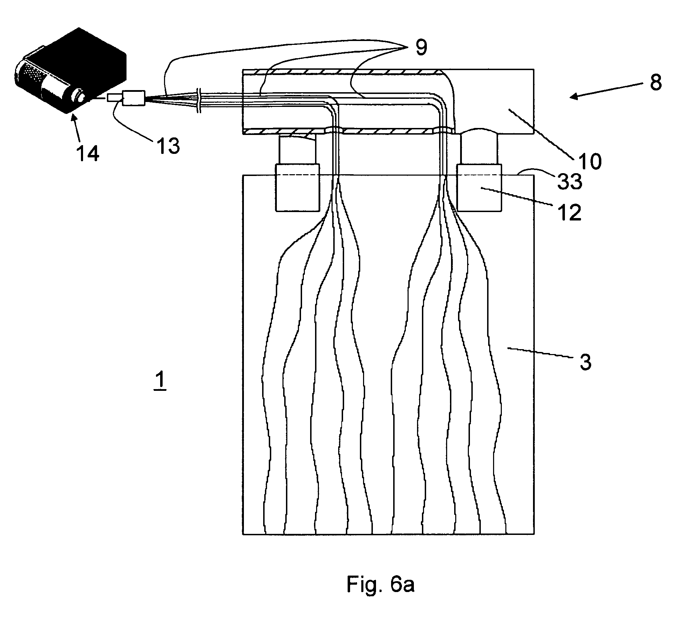

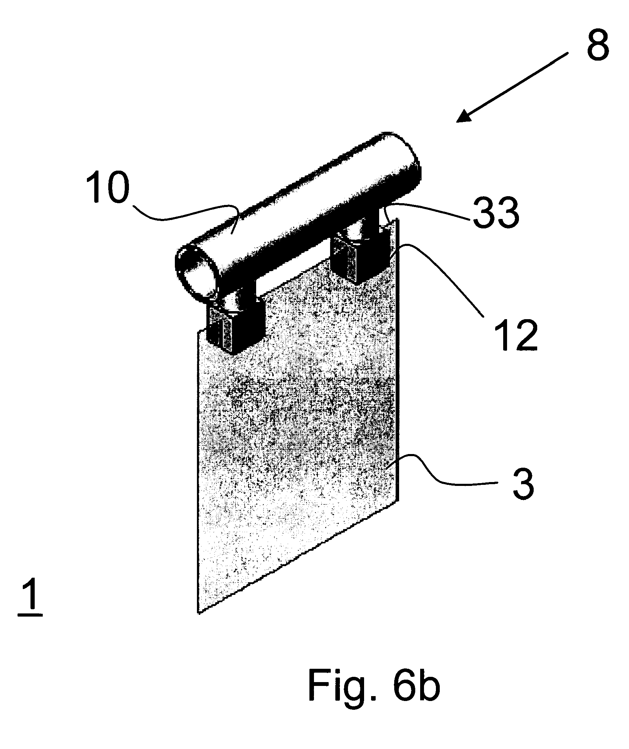

Figur 6a und 6b zeigt beispielhaft ein flächenhaftes Leuchtelement (1) welches eine erfindungsgemäße Vorrichtung (8) zur Einkopplung von Licht in die lichtleitenden Fasern (2) des flächenhaften Leuchtelements (1) umfasst, wobei die Lichtleitfasern (2) über die Kante (33) des flächenhaften Trägerelements (3) bis zum Ort einer gemeinsamen Einkopplungsstelle an einer punktförmigen Lichtquelle (11) in Form einer Verlängerung (9) hinausgehen.
Das flächenhafte Trägerelement (3) besteht aus einer 0,2 mm dicken Trägerbahn (31) mit einer Fläche von 230 mal 37 cm, auf welcher 4 Faserbündel bzw. Faserstränge lichtleitender Fasern (2) gleichmäßig aufgefasert mit Tapetenkleister fixiert wurden. Jedes Faserbündel bzw. jeder Faserstrang besteht aus ca. 1500 Einzelfasern mit einem Einzelfaserdurchmesser von 70 µm. Der Faserbündeldurchmesser des Ausgangsbündels betrug 3 mm, die Faserbündel der aufgefächerten Fasern hatten eine Höhe von 70 bis 700 µm. Darüber wurde mit Tapetenkleister eine 0,2 mm dicke Deckbahn (32) ebenfalls aus einem Papier aus Kunstfasern geklebt. Die Verlängerung (9) der 4 Stränge lichtleitender Fasern (2) wird in eine Sammelleiste (10) geführt, wo die Verlängerung (9) der lichtleitenden Fasern gebündelt und zum Ort der Einkopplungsstelle geführt werden. Bei der Verwendung des flächenhaften Leuchtelements (1) als Raumteiler, Wandverkleidung oder Vorhang ist eine Aufhängung z.B. in Form von Befestigungselementen (12) für das Leuchtelement (1) mit der Sammelleiste gekoppelt. Die Faser- bzw. Faserbündelenden werden in der Sammelleiste (10) zu einem gemeinsamen Faserbündel zusammengeführt und mittels einer Endhülse an einem gemeinsamen Ende (13) zusammengefasst und verklebt oder fusioniert. Die Endfläche der Lichtleitfasern (2) bzw. der Verlängerung (9) wird geschliffen und poliert, so dass eine optimale Lichteinkopplung erfolgen kann.
Als Lichtquelle (14) dient eine Entladungslampe mit 150 Watt Strahlungsleistung. Zur Fokussierung und Lenkung des Lichts bei der Einkopplung kann je nach Gestaltung der Vorrichtung auch eine spezielle Vorsatzoptik verwendet werden, damit das Licht innerhalb des für die Lichtleitfasern spezifischen Akzeptanzwinkels eingestrahlt werden kann. Das flächenhafte Leuchtelement (1) hat auf jeder seiner beiden Leuchtflächen einen erzeugten Lichtstrom, bezogen auf jeweils eine Leuchtfläche von etwa 150 lm/m².

Es versteht sich, dass die Erfindung nicht auf eine Kombination vorstehend beschriebener Merkmale beschränkt ist, sondern dass der Fachmann sämtliche Merkmale der Erfindung, soweit dies sinnvoll ist, beliebig kombinieren wird.

### Bezugszeichenliste:

- (1): flächenhaftes Leuchtelement
- (2): lichtleitende Einzelfasern oder Faserbündel
- (3): flächenhaftes Trägerelement
- (31): Trägerbahn
- (32): Deckbahn
- (33): Kante des flächenhaften Leuchtelements
- (4): Tapetenkleister
- (5): Halteleiste
- (6): Klemmleiste
- (61, 62): Haltebacken
- (7): Leuchtmittel
- (8): Vorrichtung zur Einkoppeln von Licht mit einer punktförmigen Lichtquelle
- (9): Verlängerung der lichtleitenden Fasern
- (10): Sammelleiste
- (11): punktförmige Lichtquelle
- (12): Befestigungselemente
- (13): Endhülse
- (14): Lichtquelle
- (15): Aufnahmeprofil
- (16): Ausnehmung (zylindrische Bohrung mit Hülsen)

## Patentansprüche

1. Leuchtelement umfassend eine Mehrzahl von lichtleitenden Fasern und ein flächenhaftes Trägerelement **dadurch gekennzeichnet, dass** das flächenhafte Trägerelement aus Papier besteht und die lichtleitenden Fasern mit diesem verbunden sind.

2. Leuchtelement gemäß Anspruch 1 **dadurch gekennzeichnet, dass** die lichtleitenden Fasern in dem flächenhaften Trägerelement eingebettet sind.

3. Leuchtelement gemäß Anspruch 1 **dadurch gekennzeichnet, dass** das flächenhafte Trägerelement aus zwei Papierbahnen besteht, zwischen denen die lichtleitenden Fasern eingebettet sind.

4. Leuchtelement gemäß Anspruch 1 **dadurch gekennzeichnet, dass** die lichtleitenden Fasern auf dem flächenhaften Trägerelement aufgebracht sind.

5. Leuchtelement gemäß Anspruch 1 bis 4 **dadurch gekennzeichnet, dass** die lichtleitenden Fasern Glasfasern sind.

6. Leuchtelement nach Anspruch 5 **dadurch gekennzeichnet, dass** die lichtleitenden Fasern seitenemittierende Fasern insbesondere seitenemittierende Stufenindexfasern und / oder endemittierende Fasern sind.

7. Leuchtelement nach Anspruch 6 **dadurch gekennzeichnet, dass** die seitenemittierende Stufenindexfaser einen lichtleitenden Kern aus Glas mit dem Brechungsindex n1 und einen den Kern entlang der Faserachse umschließenden transparenten und/oder transluzenten Mantel aus Glas mit dem Brechungsindex n2 beinhaltet, und dass sich zwischen Kern und Mantel zumindest ein Streubereich befindet, der aus einem Glas gebildet wird, welches im wesentlichen den Brechungsindex n3 aufweist, in welches Streupartikel eingelagert sind und wobei sich n3 im wesentlichen von n2 unterscheidet.

8. Leuchtelement nach einem der Ansprüche 1 bis 7, **dadurch gekennzeichnet, dass** das Papier funktionale Partikel, insbesondere lichtreflektierende oder lichtstreuende Partikel enthält.

9. Leuchtelement nach einem der Ansprüche 1 bis 8, **dadurch gekennzeichnet, dass** die lichtleitenden Fasern mit einer Vorrichtung zum Einkoppeln von Licht in die lichtleitenden Fasern gekoppelt sind wobei die Vorrichtung eine Halteleiste umfasst, welche derart angeordnet ist, dass sie ein Ende der lichtleitenden Fasern in einer linienförmigen Ausrichtung fixiert und mit einer Lichtquelle derart zusammenwirkt, dass das Licht der Lichtquelle in die linienförmige Ausrichtung der Faserenden einkoppelt.

10. Leuchtelement nach Anspruch 9, **dadurch gekennzeichnet, dass** die Lichtquelle eine linienförmige Anordnung von LEDs, insbesondere von Hochleistungsleuchtdioden ist.

11. Leuchtelement nach einem der Ansprüche 1 bis 8, **dadurch gekennzeichnet, dass** die lichtleitenden Fasern mit einer Vorrichtung zum Einkoppeln von Licht in die lichtleitenden Fasern gekoppelt sind wobei die Vorrichtung zum Einkoppeln von Licht eine Sammeleinrichtung für eine Verlängerung der lichtleitenden Fasern umfasst welche derart ausgebildet ist, dass die Verlängerung der lichtleitenden Fasern gebündelt und mit einer Lichtquelle derart gekoppelt wird, dass das Licht der Lichtquelle in das Ende des Faserbündels einkoppelbar ist.

12. Leuchtelement nach Anspruch 11 **dadurch gekennzeichnet, dass** die Lichtquelle Tageslicht oder Sonnenlicht ist.

13. Leuchtelement nach Anspruch 11 **dadurch gekennzeichnet, dass** die Lichtquelle eine Anordnung von LEDs, insbesondere von Hochleistungsleuchtdioden ist.

14. Leuchtelement nach einem der Ansprüche 10 oder 13, **dadurch gekennzeichnet, dass** die LEDs RGB-Leuchtdioden sind und das einkoppelbare Licht eine beliebige Farbe haben kann.

15. Leuchtelement nach einem der Ansprüche 1 bis 14, **dadurch gekennzeichnet, dass** das flächenhafte Leuchtelement eine Anzahl von lichtemittierenden Fasern auf zumindest einer Leuchtfläche aufweist und diese derart angeordnet sind, dass bei Einkopplung von Licht von einer Lichtquelle in zumindest ein Ende der lichtleitenden Fasern der erzeugte Lichtstrom bezogen auf die gesamte Leuchtfläche mindestens 20 lm/m², bevorzugt mindestens 100 lm/m², besonders bevorzugt mindestens 200 lm/m² beträgt.

16. Verwendung eines Leuchtelements nach einem der Ansprüche 1 bis 15 für eine Tapete zur Beleuchtung.

17. Verwendung eines Leuchtelements nach einem der Ansprüche 1 bis 15 für einen Vorhang, Raumteiler oder Rollo zur Beleuchtung.

18. Verwendung eines Leuchtelements nach einem der Ansprüche 1 bis 15 für eine Schallisolierung zur Beleuchtung.

19. Verfahren zur Herstellung eines Leuchtelements nach Anspruch 2 umfassend folgende Schritte:
a) Bereitstellen eines zur Papierherstellung aufbereiteten Papierbreis
b) Aufgeben von Papierbrei auf ein Sieb
c) Einlegen der lichtleitenden Fasern entsprechend der gewünschten Flächenverteilung
d) Aufgeben von weiterem Papierbrei über die lichtleitenden Fasern
e) Entwässerung der Papierbahn mit den lichtleitenden Fasern
f) Pressen der Papierbahn mit den lichtleitenden Fasern
g) Trocknen der Papierbahn mit den lichtleitenden Fasern

20. Verfahren zur Herstellung eines Leuchtelements nach Anspruch 3 umfassend folgende Schritte:
a) Bereitstellen einer Papierbahn
b) Aufbringen der lichtleitenden Fasern entsprechend der gewünschten Flächenverteilung auf die Papierbahn
c) Auflegen einer zweiten Papierbahn über die lichtleitenden Fasern, wobei die zweite Papierbahn mit der ersten Papierbahn verbunden, vorzugsweise verklebt wird.

21. Verfahren zur Herstellung eines Leuchtelements nach Anspruch 4 umfassend folgende Schritte:
a) Bereitstellen einer Papierbahn
b) Aufbringen der lichtleitenden Fasern entsprechend der gewünschten Flächenverteilung auf die Papierbahn, wobei diese mit der Papierbahn verbunden, vorzugsweise verklebt werden.
